# EUROPÄISCHE PATENTANMELDUNG

(11) **EP 3 217 032 A1**
(43) Veröffentlichungstag der Anmeldung: **13.09.2017**
(21) Anmeldenummer: 16000574.0
(22) Anmeldetag: 09.03.2016
(51) Int. Cl.: F16D 55/00, F16D 7/02, F16D 65/18, F25B 1/00

(54) **MECHANISCHER WÄRMEGENERATOR**

(71) Anmelder: Preglau, Otto, 9062 Moosburg (AT)
(72) Erfinder: Preglau, Otto, 9062 Moosburg (AT)

(57) **Zusammenfassung**

Die Erfindung betrifft eine Vorrichtung, mit der infolge Reibung zwischen zwei gegeneinander drehenden Reibscheiben 8 und 9 hohe Temperaturen erreichbar sind, die Energieinvestition in die Vorrichtung aber als relativ klein bezeichnet werden kann.

Zei Hebel 2 und 3 rotieren im Betrieb um eine ortsfeste Zentralachse 1, die drehfest ein Kettenrad 4 trägt, das durch eine Umlaufkette 5 mit einem gleich großen Kettenrad 6 antriebsverbunden ist und so eine unbeschleunigte Translation (*ϕ* = 0) bei Drehung der genannten Hebel 2 und 3 erreicht.

Durch Verlängerung der Umlaufkette 5 mittels dreier kleiner zusammenhängender Kettenräder 12, längsverschiebbar in einer am Hebel 2 montierten Schiene 13, aber auch drehbar gelagert, dabei sorgt eine Zugfeder 14 für die Spannung der Umlaufkette 5.

Die kleine Reibscheibe 8 sitzt auf drei längsverschiebbaren Achsen 7, wodurch z.B. durch Elektromagneten elektronisch gesteuert die Reibscheibe 8 gegen die zweite große Reibscheibe 9 gepreßt werden kann.

Der Antrieb der Reibscheibe 9 erfolgt durch den Rotor 15 eines im Hebel 3 gelagerten Elektromotors, aber auch zusätzlich über die wandernden Kettenglieder der Umlaufkette 5 mittels eines weiteren Kettenrades 11, das die zusätzliche Rotationsenergie von der Außenseite der Umlaufkette 5 abnimmt.

Da der Stator 16 des Elektromotors in einer unbeschleunigten Translation (*ϕ*=0) im Kreis um die Zentralachse 1 geführt wird, werden dem System vom Stator 16 weder beschleunigende noch abbremsende Kräfte zugeführt.

Vorteilhaft ist es den Radius R zwischen dem Drehmittelpunkt, also der Zentralachse 1 und der Antriebswelle 10 der Reibscheibe 9 so groß wie technisch möglich auszugestalten.

Durch Einplanung eines Planetengetriebes (z.B. mit dem Übersetzungsfaktor 4 : 1) kann die Drehzahl der im Uhrzeigersinn rotierenden Hebel 2 und 3 und so die Drehzahl der kleinen Bremsscheibe 8 gegen den Uhrzeigersinn auf eine Drehung pro Sekunde reduziert werden, wodurch aber die Bremsscheibe 9, im Uhrzeigersinn drehend, dreimal pro Sekunde über die kleine Bremsscheibe 8 drüberschleift.

## Beschreibung

Wärmepumpen sind allgemein bekannte Maschinen, die Wärme von einem tiefen Temperaturniveau auf ein höheres Niveau hochpumpen bei einem maximalen Wirkungsgrad von 1 : 3.

Zie1 der Erfindung·ist es nun ein Gerät zu entwickeln, das Wärmeenergie mit besseren Wirkungsgraden liefert und hohe Temperaturen abstrahlt.

Dabei ist vor allem an die Reibungswärme gedacht, die sich aus der Normalkraft mit der sich die Bremsflächen aufeinanderdrücken, dem Reibungskoiffitienten und der Winkelgeschwindigkeit zusammensetzt, und kann bei festen Körpern Temperaturen bis 1000° C erreichen.

Nach dem Oberbegriff des Patentanspruchs wird ein entsprechend großes Kettenrad an der Peripherie eines Hebels gelagert, das dem Hebel mit dem gleich großen Drehwinkel ϕ, aber entgegen rotiert und so eine Translationsbewegung in einer Kreisbahn zeigt und über eine Umlaufkette mit einem ortsfesten gleich großen , an der Zentralachse montierten Kettenrad in Wirkverbindung steht.

Bei Drehung des oben genannten Hebels, angetrieben mittels eines Elektromotors wandern die Kettenglieder der Kette der Hebeldrehung entgegen und das gleich große translatorisch geführte Kettenrad (ϕ= 0) umkreist somit die Zentralachse.

Das periphere Kettenrad ist mit drei längsverschiebbaren Achsen armiert, die an ihrem Ende eine Scheibe mit einem Bremsbelag tragen und die Scheibe dadurch auch translatorisch mifährt. (ϕ = 0)

Dabei wird entsprechend den Erfordernissen die genannte Scheibe durch Federspannung, pneumatisch, hydraulisch oder aber durch Elektromagneten gegen die zweite rotierende Scheibe mit Bremsbelag ausgestattet, stark angedrückt.

Es ist natürlich unbedingt auf die Kettenführung der Umlaufkette zu achten, damit durch die Abnahme der Rotationsenergie von der Außenseite der Umlaufkette der rotierende Hebel nicht abgebremst sondern eher beschleunigt wird.

Die Welle der zweiten Bremsscheibe wird durch den Rotor eines Elektromotors, der mit den beiden Hebeln mitfährt, angetrieben.

Dabei muß es natürlich gedacht sein die Reaktion des Stators insofern zu kompen sieren, indem der Stator wohl mit den beiden Hebeln im Kreis mitfährt, seine Gegenrotation zum Rotor aber mittels einer Stangen-Balken-Konstruktion in eine unbeschleunigte Translations(ϕ= 0) umgewandelt wird.

Der Stator des Elektromotors lagert nämlich längsverschiebbar an zwei horizontalen Stangen, die gleitend mittels Schlitten an zwei ortsfesten Balken nach beiden Seiten verschoben werden können.

Es ist natürlich auch die Kettenführung der Umlaufkette zu beachten, da die erforderliche Rotationsenergie des Systems von der Außenseite der Umlaufkette mittels eines weiteren Kettenrades abgenommen wird.

Dabei muß somit der Radius r zwischen dem Drehmittelpunkt des Getriebes und der Antriebswelle der großen Bremsscheibe möglichst groß ausgerichtet sein, da sich dadurch bei großem Radius r auch das Drehmoment M dementsprechend erhöht.

### (Drehmoment M = Radius r x Umfangskraft F - F)

Anschließend soll nun eine mögliche Ausführungsform sowie die Funktion der Mechanischen-Wärmepumpe mit besten Wirkungsgraden näher beschrieben werden.
Fig. 1 zeigt die Mechanische-Wärmepumpe von der Seite mit ihren Getriebeteilen

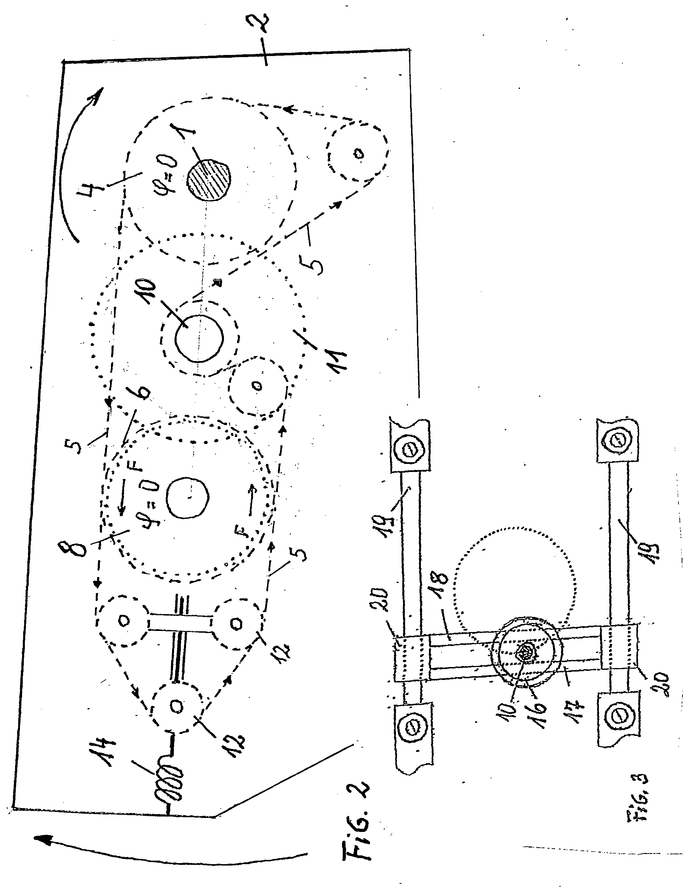

Fig. 2 soll in einem Schnittbild von oben nur die Kettenführung der Umlaufkette zwischen den gleich großen Kettenrädern und soll auch das zugeordnete Lager des rotationsenergieabnehmenden Kettenrades im Hebel veranschaulichen.
Fig. 3 veranschaulicht die Konstruktionsmöglichkeit mit der ein im Kreis fahrender und dabei rotierender Körper in eine im Kreis geführte unbeschleunigte Translation (ϕ = 0) umzuwandeln ist, nämlich mittels einer Stangen-Balken-Konstruktion, wodurch sodann der genannte Körper ohne Drehwinkel ϕ im Kreis verschoben werden kann.

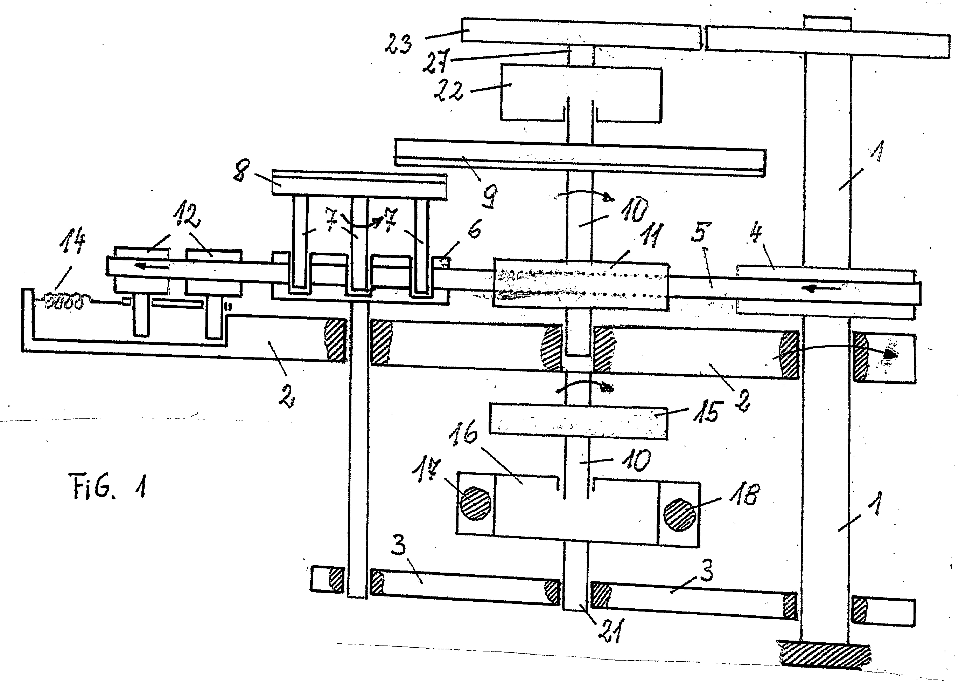

Fig. 1 skizziert die Mechanische-Wärmepumpe von der Seite mit einer ortsfesten Zentralachse 1, an der zwei Hebel 2 und 3 lagern.

Zusätzlich sitzt drehfest an der Zentralachse 1 ein Kettenrad 4 , das mittels Umlaufkette 5 mit einem gleich großen Kettenrad 6 wirkverbunden ist, das somit eine Translationsbewegung (ϕ= 0) in einer Kreisbahn beschreibt und ebenfalls im Hebel 2 lagert.

Drei Achsen 7 lägern längsverschiebbar im Kettenrad 6 und tragen drehfest eine Scheibe 8 mit dem erforderlichen Bremsbelag, der kontinuierlich im Bremskontakt mit der zweiten, Bremsbelagbestückten Scheibe 9 ebenfalls im Wirkkontakt steht.

Um am translatorisch geführten Kettenrad 6 ein reines Drehmoment M aufzubringen, (zwei gleich große antiparallele Kräfte F-F) wird die Umlaufkette 5 mittels dreier zusammenhängender kleiner Kettenräder 12 verlängert, die am Hebel 2 gemeinsam in einer Schiene 13 verschiebbar lagern und so auch als Kettenspanner mittels Zugfeder 14 agieren.

Wie schon oben angedeutet wird die Mechanische-Wärmepumpe mit einem integrierten Elektromotor, durch den Rotor 15 desselben bescheunigt, indem dieser die Achse 10 der großen Bremsscheibe 9 in die Rotationsrichtung der Hebel 2 und 3 antreibt. Dabei ist es zwingend vorgesehen das Gegendrehmoment des Stators 16 mittels einer Stangen-Balken-Konstruktion das Drehmoment -M des Stators 16 bei der Umkrei sung der Zentralachse 1 in eine unbeschleunigte Translation (ϕ = 0) umzuwandeln, wodurch der Stator 16 weder abbremsende oder beschleunugende Kräfte F in das System einbringt.

Der Stator 16 lagert nämlich längsverschiebbar an zwei horizontalen Stangen 17 und 18, die gleitend mittels Schlitten an zwei otsfesten Balken 19 und 20 nach beiden Seiten verschoben werden.

Da sich die Temperatur aus dem Reibungskoiffitienten und der Winkelgeschwindigkeit ω aber auch von der Stärke der Normalkraft F_{N} zusammensetzt, ist es vorgesehen die oben genannten drei Achsen 7 mittels Elektromagneten zu bestücken und damit die tanslatorisch geführte Bremsscheibe 8 gegen die Bremsscheibe 9 kraftvoll zu drücken, um dadurch ein hohes Temperaturniveau zu erreichen, die sodann zu Heizzwecken zur Verfügung stehen, aber auch großtechnisch in Kalorischen-Kraftwerken einsetzbar sind.

Dabei kann in kalorischen Kraftwerken beispielsweise die Mechanische-Wärmepumpe in einem Kessel positioniert sein, wobei nur das Antriebsrad 3 außerhalb des Kessels lagert und mittels einer Wasserturbine, einer Dampfturbine oder eines Elektromotors angetrieben wird.

Eine Wasserpumpe befördert heißes Wsser über ein Ventil mit einem Druck von beispielsweise 50 bar in den oben genannten Kessel, in dem eine Temperatur von etwas über 640° C Tₘₐₓ herrscht.

Dabei verdampft das Wasser bereits bei einer Temperatur von 264° C Tᵥ und erreicht mit 640° C Tₘₐₓ die Maximaltemperatur vor der Turbine.

Danach wird der hocherhitzte und hoch vorgespannte Dampf in einer Dampfturbine gegen einen Unterdruck entspannt und die Wellenarbeit mit Hilfe eines Generators in Strom gewandelt.

Der Wirkungsgrad einer solchen Gegendruckturbinenanlage hängt bekanntlich von der Maximaltemperatur, dem Maximaldruck, vom isentropen Wirkungsgrad der Turbine und vom Turbinenaustrittszustand ab.

Wie schon dargelegt kann der vorgesehene Elektromotor mit dem translatorisch geführten Stator 18 (ϕ = 0) in einer möglichst großen Kreisbahn um die Zentralachse 1 geführt werden, wobei der Rotor 15 die beiden Hebel 2 und 3 infolge der Wirkverbindung mit der entgegen der Hebel 2 und 3 laufenden Umlaufkette 5, mit der doppelten Umfangskraft (2 F) antreibt.

In konkreten Zahlen ausgedrückt, werden mittels des Rotors 15 des Elektromotors 17 kW in das System eingebracht, infolge der Einbeziehung der entgegendrehenden Umlaufkette 5, wird aber eine doppelt so große Umfangskraft F_{U} (34 kW) aufgebracb Dabei wird aber auch infolge eines sehr großen Kreisbahnradius aber auch infolge einer großen Drehzahl der Vorrichtung in der Zeiteinheit trotz geringem Arbeitsinput ein großer Output erreicht.

Der integrierte Elektromotor als Beispiel hat folgende technische Daten:

| | |
|---|---|
| Nennankerspannung: 145 V | Nenndrehmoment: 68 Nm |
| Nennankerstrom: 133 A | Nenndrehzahl: 2400 min⁻¹ |
| Nennleistung (Dauer): 17 kW | Max. Drehzahl: 6700 min⁻¹ |

Abschließend bietet sich nun die Gelegenheit bei einer maximalen Übersetzung und auch die Möglichkeit die Leistung P_{G} des Getriebes zu berechnen, indem man die abzuführende Arbeit in der Zeiteinheit (sec) der Antrieb sscheibe 9 bzw. die große Reibscheibe betrachtet.

Natürlich ist es möglich mit dem beschriebenen Getriebeaufbau auch Arbeitsmaschinen zu beschleunigen.

Die Drehzahl des Rotors 15 des Elektromotors beträgt beispielsweise 40 sec⁻¹ (2400 min⁻¹ : 60 = 40 sec⁻¹) Die Achse 10 mit drehfestem Kettenrad 11 und so die Bremsscheibe 9 umkreisen die Zentralachse 1 mit dem Umfangsweg U = 3.14159 m (U = 2rπ) r = 0,5 m P = Leistung = Umfangskraft F_{U} x Weg m pro Sekunde (P = Nm/sec = Watt) F_{U} = 34 Nm/sec : 3.14159 m/sec = 10.82 N 10.82 N : 9.81 = 1.1 kg Durch den Einbau eines Planetengetriebes 4 :1 wird erreicht, daß sich die translatorisch geführte Bremsscheibe 8 (ω = 0) bei Rotation des Getriebes im Uhrzeigersinn auch einmal gegen den Uhrzeigersinn dreht, die zweite große Bremsscheibe 9 aber rotiert an der Rotorwelle 10 viermal so schnell in die Rotationsrishtung des Getriebes, wodurch sie absolut dreimal so schnell über die kleine Bremsscheibe schleift.

Bei Einsatz eines Planetengetriebes (Übersetzungsgetriebe 4 : 1) ergibt sich daraus ein Input von 17 kW und einem Output von 34 kW + Wärmeenergiegewinn. input 17 kW output 34 kW zusätzlich Wärmeenergieabstrahlung

## Patentansprüche

1. Allgemein sind mechanische Reibungsbremsen, die Vorrichtungen zur Verzögerung von bewegten Körpern bis zur Ruhe sind und bei ihrer Arbeit heiß laufen, **dadurch gekennzeichnet, daß**
die Mechanische-Wärmepumpe Wärmeenergie bei hohen Temperaturen durch Reibung und optimale Wirkungsgrade liefert, wobei es erforderlich ist vorerst die beiden Hebel 2 und 3 durch Rotationsenergiezufuhr mittels eines Elektromotors die vorbestimmte Winkelgeschwindigkeit ω zu erreichen, bevor eine kleine translatorisch geführte Bremsscheibe 8 elektronisch gesteuert an eine große rotierende Scheibe 9 mit der Normalkraft F_{N} gedrückt wird und es vorgesehen sein muß die vorbestimmte Winkelgeschwindigkeit ω trotz Abfuhr von Wärme und so das Temperaturniveau durch kontinuierliche Zufuhr von Rotationsenergie konstant zu halten.

2. Mechanische-Wärmepumpe nach Anstruch 1 **dadurch gekennzeichnet, daß** eine ortsfeste Zentralachse 1 ein drehfestes Kettenrad 4 trägt, das über eine Umlaufkette 5 mit einem gleich großen Kettenrad 6 antriebsverbunden ist und so bei Drehung der Hebel 2 und 3 eine unbeschleunigte Translation (ϕ = 0) zeigt, wobei am genannten Kettenrad 6 eine Bremsscheibe 8 auf drei längsverschiebbaren Achsen 7 ruht und elektronisch gesteuert beim Erreichen der vorbestimmten Winkelgeschwindigkeit ω gegen die zweite große Bremsscheibe 9 gepreßt wird und somit Wärme auf hohem Temperaturniveau abstrahlt.

3. Mechanische-Wärmepumpe nach einem der Ansprüche 1 und 2 **dadurch gekennzeichnet, daß**
es vorgesehen ist, um am translatorisch geführten Kettenrad 6 ein reines Drehmoment M (F-F) durch Verlängerung der Umlaufkette 5 aufzubringen; dabei müssen drei kleine zusammenhängende Kettenräder 12 vorgesehen sein, die am Hebel 2 gemeinsam in einer Schiene 13 deh- und verschiebbar lagern und dadurch auch als Kettenspanner mittels Zugfeder 14 agieren.

4. Mechanische-Wärmepumpe nach einem der Ansprüche 1 bis 3 **dadurch gekennzeichnet, daß**
der Rotor 15 des Elektromotors einmal das Kettenrad 11 im Uhrzeigersinn antreibt, aber auch zusätzlich die Drehenergie der wandernden Kettenglieder der Umlaufkette 5 von der Außenseite derselben abnimmt und somit in der Zeiteinheit mit der doppelten Umfangskraft F_{U} dreht, mit Verlagerung des Drehpunktes DP an die wandernden Kettenglieder , und daß der Radius R, der zwischen dem Drehmittelpunkt DM an der Zentralachse 1 der Hebel 2 und 3 und der Antriebswelle 10 der Reibscheibe 9, liegt, also möglichst groß auszugestalten ist, damit das Drehmoment M und somit die Leistung P an der Reibscheibe 9 mit P = 2F x R / sec angegeben werden kann.

5. Mechanische-Wärmepumpe nach einem der Ansprüche 1 bis 4 **dadurch gekennzeichnet, daß**
der Stator 16 des Elektromotors translatorisch im Kreis um die Zentralachse 1 geführt wird, indem das auftretende Gegendrehmoment -M des Stators 16 mittels einer Stangen-Balken-Konstruktion in eine unbeschleunigte Translation (ϕ = 0) umgewandelt wird, indem an zwei horizontalen Stangen 17 und 18 der Stator 16 ver schiebbar lagert und die zwei Stangen 17 und 18 quer an den Balken 19 mittels Schlitten 20 hin- und hergleiten, wodurch der Stator 16, wie schon oben erwähnt in einer unbeschleunigten Translation im Kreis um die Zentralacgse 1 geführt wird.

6. Mechanische Wärmepumpe nach einem der Ansprüche 1 bis 5 **dadurch gekennzeichnet, daß**
durch ein integriertes Übersetzungsgetriebe (z.B. Untersetzungsfaktor 4 : 1) bei Drehung der Hebel 2 und 3 im Uhrzeigersinn die translatorisch geführte Bremsscheibe 8 (ω = 0) einmal gegen den Uhrzeigersinn dreht, die zweite große Bremsscheibe 9 aber rotiert, an der Rotorwelle 10 montiert, aber viermal im Uhrzeigersinn.

7. Mechanische Wärmepumpe nach einem der Ansprüche 1 bis 6 **dadurch gekennzeichnet , daß**
die Rotationsenergie vom Abtriebskettenrad 26 abgenommen wird, das drehbar an der Zentralachse 1 lagert und über eine Umlaufkette 25 mit dem an der Planetengetriebewelle 27 festmontierten Kettenrad 24 antriebsverbunden ist.

8. Mechanische-Wärmepumpe nach einem der Ansprüche 1 bis 7 **dadurch gekennzeichnet, daß**
die beiden Reibscheiben 8 und 9 als Stirnzahndäder ausgebildet sind und im Zahneingriff zueinander stehen, wodurch die Mechanische-Wärmepumpe als Antriebsaggregat nur noch Arbeit leistet.
